# EUROPEAN PATENT SPECIFICATION

(11) **EP 4 406 695 B1**
(45) Date of publication and mention of the grant of the patent: **02.07.2025**
(21) Application number: 24154191.1
(22) Date of filing: 26.01.2024
(51) Int. Cl.: B23Q 3/155

(54) **GRIPPER FOR THE HANDLING ARM OF THE HANDLING DEVICE FOR AUTOMATIC EXCHANGE OF MACHINING TOOLS**
GREIFER FÜR EINEN HANDHABUNGSARM EINER HANDHABUNGSVORRICHTUNG FÜR DEN AUTOMATISCHEN AUSTAUSCH VON BEARBEITUNGSWERKZEUGEN
DISPOSITIF DE PREHENSION POUR BRAS MANIPULATEUR D'UN SYSTEME DE MANIPULATION POUR L'ECHANGE AUTOMATIQUE D'OUTILS D'USINAGE

(30) Priority: 26.01.2023 CZ 202300029 U
(43) Date of publication of application: 31.07.2024
(73) Proprietor: VÚTS, a.s., Liberec XI - Ruzodol I 460 01 Liberec (CZ)
(72) Inventor: Richter, Ales, 460 15 Liberec, Liberec XV-Stary Harcov (CZ)
(74) Representative: Musil, Dobroslav

(56) References cited:
- EP-A1- 3 321 031
- EP-A1- 3 718 689
- DE-B4- 102013 109 982

## Description

### Technical field

The present invention relates to a gripper of the handling arm of a handling device for automatic exchange of machining tools, where the gripper includes a frame on which a rigid support is mounted, wherein a pair of gripping means comprising pressing elements is further mounted on the frame of the gripper, the rigid support is provided with a pair of abutting elements which are arranged axially symmetrically with respect to the longitudinal axis of the V-shaped gripper, the abutting elements being adapted to fit into a handling groove of a tool holder of a machining tool and attach the tool holder of the machining tool to the handling tool, wherein the pair of gripping means is provided with a pair of pressing fingers oriented axially symmetrically with respect to the longitudinal axis of the gripper, each pressing finger being swingingly mounted in the frame of the gripper and provided at its free end with a pressing element which is arranged at a level in front of one abutting element of the rigid support, wherein the pressing element is adapted to fit into the handling groove of the tool holder of the machining tool and to grip the tool holder of the machining tool by the handling groove.

### Background art

Large, computer-controlled machine tools are usually equipped with tool magazines for exchanging machining tools between individual operations, when changing series or when the machining tool wears out. The machining tool is clamped in a tool holder 1 (sometimes also called a "tool clamp"), with which it is ready for exchange in the tool magazine.

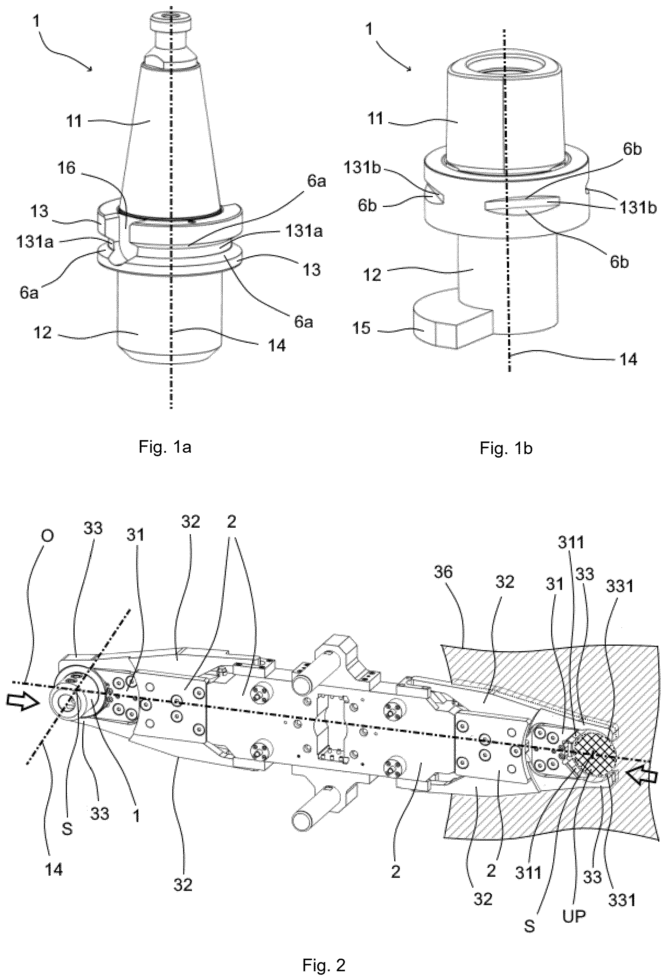

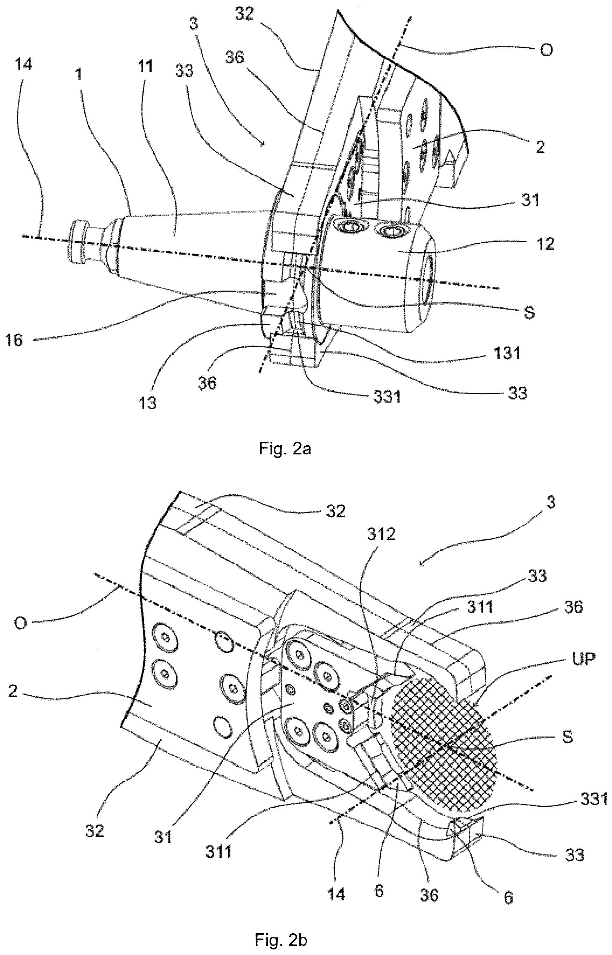

Tool holders 1 known from the background art, e.g., tool holders 1 known as BIG-PLUS (Fig. 1a), CAPTO (Fig. 1b), etc., are essentially rotary bodies comprising a shank 11 for clamping into the spindle cavity of the machine tool, a tool clamping portion 12 for clamping the machining tool 15 in the tool holder 1 and a flange 13 arranged between the shank 11 and the tool clamping portion 12. The flange 13 is provided with a handling groove 131 which is substantially V-shaped and widens from the axis 14 of the tool holder **1** to the circumference of the flange 13. The two most common handling groove shapes are a radial handling groove 131a (Fig. 1), known, for example, from US 5352073 A (US 5352073 A, element 5a in Figs. 1 to 12), and a straight handling groove 131b (Fig. 2), known, for example, from US 2003185638 A1 (US 2003185638 A1, element 7 in Figs. 1 to 22). The flange 13 comprises a pair of contact surfaces 6, 6a, 6b arranged on the sides of the handling groove 131, 131a, 131b to be gripped by the gripper. The flange 13 with a radial handling groove 131a is provided with conical contact surfaces 6a (Fig. 1). The flange 13 with a straight handling groove 131b is provided with straight contact surfaces 6b (Fig. 2). The contact surfaces 6, 6a, 6b of one pair are positioned at an acute angle to each other, e.g., 60 °, and are oriented towards the inside of the handling groove 131, 131a, 131b, so as to form a prism to be gripped by a wedge-shaped element of the gripper. In practice, various types of tool holders 1 are used, such as CAPTO, Big Plus, HSK, KM, ISO, BT, CAT, etc. The flanges 13 of these holders usually have standardized diameter sizes, e.g., 32, 40, 50, 63, 80 or 100 mm (e.g., CAPTO or BIG PLUS types), optionally also 25 mm, 125 mm, 160 mm (e.g., HSK type). The tool holder 1 is positioned with its longitudinal axis 14 substantially perpendicular to the gripping plane of the gripper, wherein the radial handling groove 131a /straight handling grooves 131b is/are situated at the level of the gripping plane of the gripper. Tool holders 1 for large machine tools, e.g., with handling flange diameters of 63, 80, 100, 125, 160 mm, etc., reach a length of up to several tens of centimetres and a relatively large weight, which places significant demands on the rigidity of the grip of the holder 1 with the machining tool 15 by means of the gripper.

Handling devices which comprise a handling arm with grippers for handling machining tools in tool holders are well known in the background art. A single-arm manipulator with two grippers, i.e., with one gripper at each end of the handling arm, is known, e.g., according to CZ 2013358 A3. Dual arm manipulators with four grippers are also known, i.e., with one gripper at each end of each of the two handling arms.

The handling device provided with one handling arm with two grippers is usually adapted to handle tool holders of the same type and size, i.e., also the same type and size of the handling groove 131, 131a, 131b of the tool holder 1. When replacing a tool holder 1, one tool holder 1 is grasped and removed by one gripper, the handling arm is rotated and the second tool holder 1 is established in place of the first tool holder 1 by the second gripper in which the second tool holder 1 is grasped. The handling device with four grippers can be designed as single-purpose, i.e., all the four grippers grip the same type and size of tool holder 1, or as dual-purpose, i.e., one pair of grippers on one arm is adapted to grip and manipulate one type and/or size of tool holder 1 and the second pair of grippers on the second arm is adapted to grip and manipulate a different type of tool holder 1 or it is adapted to grip and manipulate the same type of tool holder 1 as the first pair, but this tool holder 1 has a different size from that of the tool holder 1 in the first pair of grippers.

The gripper of the above-described handling device known from the background art is normally provided with gripping means for gripping a tool holder 1 with a handling groove 131, 131a, 131b. The gripping means of the gripper, e.g., rotatably mounted lever jaws, linearly sliding clamping jaws, etc., are provided with gripping elements on their opposite sides for gripping the tool holder by the handling groove 131, 131a, 131b. The gripping element for gripping BIG PLUS, HSK tool holders, etc., by a radial handling groove 131a, has the shape of an obtuse arched wedge, which is terminated towards the centre of the grip of the gripper by a cylindrical inner terminating surface and on the sides is provided with a pair of conical contact surfaces which form an acute angle with the gripping plane of the gripper. The gripping element for gripping tool holders, e.g., CAPTO, HSK tool holders, etc., by the straight handling groove 131b, has the shape of an obtuse straight wedge, which is terminated towards the centre of the grip of the gripper by a flat inner terminating surface and is provided with a pair of straight contact surfaces on the sides, which form an acute angle with the gripping plane of the gripper. The disadvantage of such grippers is that when changing the size and/or type of the tool holder 1, it is necessary to replace the handling arm of the handling device, or to use an expensive dual-arm handling device with two pairs of mutually different grippers. Replacing the handling arm requires stopping the handling device or stopping the machine tool and results in operational and economic losses. However, manufacturing enterprises are increasingly faced with the need or even necessity to use several different sizes and/or types of tool holders 1 on a single machine tool, for example, due to the versatility of the machine, different requirements for different machine tools, etc. This currently leads to the need to use multiple handling arms, the replacement of which causes unwanted breaks in machine operation.

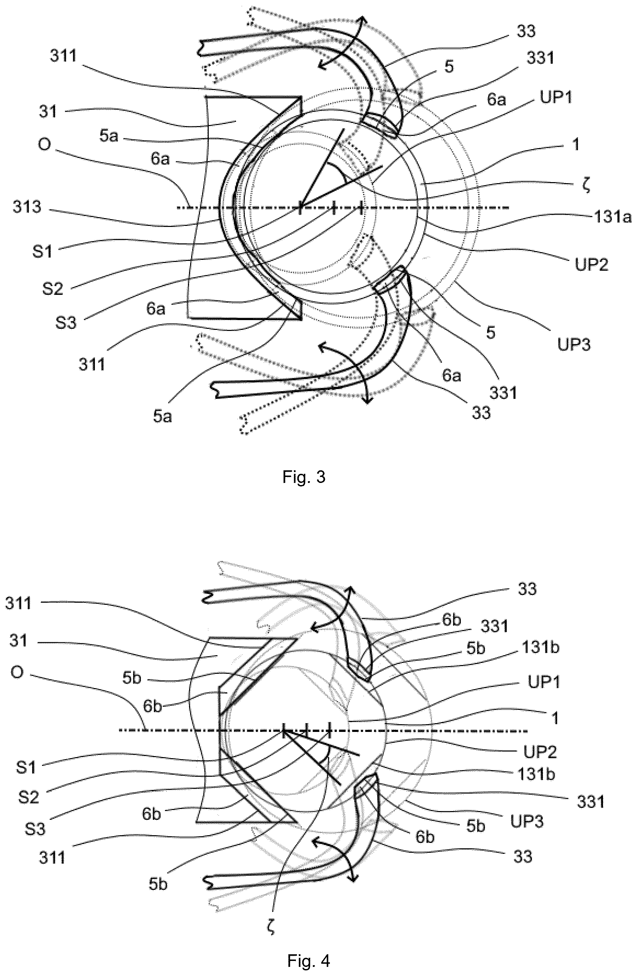

The application for invention JP S563160 A discloses a single-arm manipulator for the transfer/exchange of machining tools, whose handling arm is provided at its opposite ends with two grippers, each of which is provided with a pair of mirror-opposed swinging jaws. Each of the jaws is provided with three arc-shaped gripping elements (parts) arranged next to each other and successively connected to each other, wherein the outermost gripping elements have the same radii of curvature and the radius of curvature of the middle gripping element is smaller than the radius of curvature of the outermost gripping elements (JP S563160 A, Fig. 4 and par. 0002 - curved parts 26 and 28). This makes the jaws adapted to grip tool shanks of two different sizes. The middle gripping elements (middle part) serve to grip the tool shank of a smaller diameter, and the outermost gripping elements on each of the jaws are used to grip the tool shank of a larger diameter. Each arc-shaped gripping element is provided on its sides with a pair of tapered contact surfaces (JP S563160 A, Fig. 4 and par. 0002 - tapered parts 27, 29). When the jaw is clamped, all the gripping elements act movably against each other, with all the contact surfaces of the gripping elements exerting pressure on the respective contact surfaces in the handling groove of the gripped tool holder, towards the axis of the tool holder.

The disadvantage of the gripper disclosed in JP S563160 A is that it grips the larger of the tools/tool holders for which it is adapted only with the inner and outer ends of the jaws, the jaws being movably mounted in the body of the handling arm. This reduces the size of the contact surfaces of the jaw gripping elements and reduces the rigidity of the jaw seating in the body, both of which result in lower gripping rigidity of the tool/tool holder and, particularly in the case of large and/or heavy tools/tool holders, cause problems with rigidity, handling speed, manipulator durability, etc. Another disadvantage of such a gripper is that it can only reliably grip tools/tool holders with a cylindrical outer surface and/or with a radial handling groove and cannot grip tools/tool holders of other shapes, such as prism, three-sided polygon, etc., and/or with other types of handling grooves, e.g., straight handling grooves.

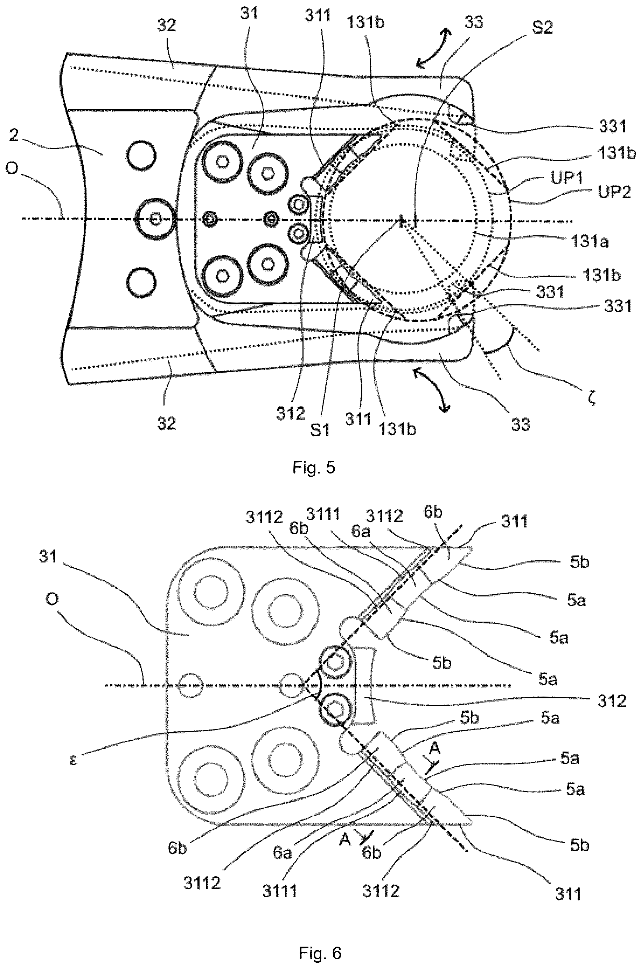

The application for invention US 2002028735 A1 discloses a machine tool with a handling device with a single-arm manipulator, whose handling arm is provided with a gripper for gripping a machining tool. The gripper comprises a rigid support (US 2002028735 A1, par. 0034 - first member 11 attached to the arm of the gripper 16), which is mounted directly in the body of the handling arm and is shaped and sized to grip a tool/tool shank by a radial handling groove in a first gripping plane. The rigid support, (US 2002028735 A1, first member 11) is provided, for example, with a pair of arc-shaped supporting elements with contact surfaces (US 2002028735 A1, par. 0034 - contact surface 14 of spring-like, prismatic shape, the profile of which corresponds to the groove on the circumference of the tool shank or tool). The circumferential angle of each of the contact surfaces (US 2002028735 A1, contact surface 14) of the arc-shaped supporting elements is approximately 30 °, with a circumferential spacing angle of 60 ° to 90 ° (measured from the centre of the gripping space of the gripper). Furthermore, the gripper comprises a rotatably swingable gripping means (US 2002028735 A1, Figs. 5a and 5b, second member 12). The gripping means is realized, for example, as one substantially semi-circular clamping jaw which is rotatable around an axis perpendicular to the longitudinal axis of the tool/tool shank to be gripped (US 2002028735 A1, Figs. 1, 2 and 5a). The semi-circular clamping jaw grips the tool/tool shank in a second gripping plane and is assigned to a part of the tool other than the part with the handling groove, e.g., its cylindrical or tapered shank (US 2002028735 A1, par. 0011, Figs. 1, 2 and 3). The semicircular clamping jaw swings and clamps the tool holder substantially in the direction of its longitudinal axis (US 2002028735 A1, par. 0047, Fig. 5s), thereby pressing it substantially perpendicularly against the supporting member located in the handling groove. Optionally, the semicircular clamping jaw is provided with contact surfaces (US 2002028735 A1, spring-like contact surface 14), wherein each of these contact surfaces has a circumferential angle of 15 ° to 30 ° and a circumferential spacing angle of less than 180 ° (US 2002028735 A1, par. 0041, Fig. 4). In another exemplary embodiment, the gripping means is realized as a pair of rotatable swingable jaws (US 2002028735 A1, Fig. 5b, elements 17 and 18), which clamp/open substantially perpendicularly to the longitudinal axis of the tool/tool shank to be gripped, the rigid supporting elements being placed below the elements of the gripping means (US 2002028735 A1, par. 0043), so that they grasp the tool shank by a part other than its handling groove (US 2002028735 A1, Fig. 5b).

A handling arm according to US 2002028735 A1 is suitable for gripping a tool holder, which, in addition to contact surfaces inside a handling groove, also comprises an additional contact surface, e.g., on the shank of a tool holder, for gripping a clamping jaw/clamping jaws. However, the shanks of tool holders of some types (e.g., CAPTO, BIG PLUS, etc.) cannot be used for gripping the handling device with a gripper, because they must be free when being inserted into the machine tool (e.g., due to a possible collision with a clamping spindle). In addition, the jaw/jaws of the gripper according to US 2002028735 A1 grips/grip the tool/tool shank by the cylindrical or conical handling surface in a different gripping plane than that of a rigid support, wherein the contact surfaces of the supporting and locking elements of the gripper are pressed against each other in a direction substantially perpendicular to the gripping plane of the rigid support, which does not ensure sufficient rigidity for gripping large and relatively heavy tool holders/tools. Another disadvantage of the handling arm according to US 2002028735 A1 is that it is single-purpose and does not allow manipulation with tool holders of different sizes and/or types.

Document US3953039A discloses a tool holder which comprises a U-shaped socket and a pair of mutually fixed arms with longitudinal grooves in which retractable fingers are arranged to engage in the bottom of the tool holder groove. The inner edges of the socket define the gripping space for the deposition of one type of tool holder, with a specific size of the annular handling groove.

EP 0291828 A2 discloses a gripper of machine tools comprising one gripping space, which is defined by the arms of a semicircular U-shaped rigid support and clamping jaws, for gripping a tool holder of one type and size.

EP 0255567 A1 discloses a gripper comprising one gripping space defined by inclined surfaces (element 69 of document EP 0255567 A1) at the ends of abutting elements and by other inclined surfaces (elements 67 and 68) arranged on the clamping jaws, in the area of their greatest width.

WO 9318884 A1 discloses a gripper with one gripping space which is defined by a rigid U-shaped support and pressure rolls arranged at the ends of rotatable arms, which serves to grip a tool holder of one type and size.

EP 3321031A1 discloses a gripper adapted to hold tool holders having different sizes, having a support that is slidable along the longitudinal axis of the gripper so that regardless of the size of the held tool holder, the center of the gripping centre always remains at the same position.

The object of the invention is to eliminate or at least reduce the disadvantages of the background art, particularly to provide a gripper for a handling arm for exchanging machining tools, which allows to grip and reliably handle large and relatively heavy tool holders of different sizes and possibly different types without rebuilding.

### Summary of the invention

The object of the present invention is achieved by a gripper for a handling arm of a handling device for automatic exchange of machining tools, whose principle consists in that between the abutting elements of a rigid support and pressing elements at the free ends of pressing fingers are arranged at least two gripping spaces for tool holders of at least two different sizes and/or types, where centres of the gripping spaces are arranged at a distance from each other on the longitudinal axis of the gripper, wherein the pressing elements at the free ends of the pressing fingers are in each position situated in a direction away from the abutting elements of the rigid support behind the centre of the gripping space for the tool holder of the machining tool and each abutting element of the rigid support is provided with at least two mutually different supporting elements and each pressing element at the free ends of the pressing fingers is provided with at least two mutually different locking elements, wherein the first supporting elements and the first locking elements are adapted to fit into the handling groove of the first type of the tool holder of the machining tool and to grip the first type of the tool holder of the machining tool by the handling groove and other supporting elements and other locking elements are adapted to fit into the handling groove of a different type of the tool holder of the machining tool and to grip a different type of the tool holder of the machining tool by the handling groove.

The advantage of this gripper is that it grips firmly large and relatively heavy tool holders of different sizes and types, with handling grooves of mutually different sizes and different shapes, wherein the grip strength of the gripper by the handling groove of the tool holder is sufficient to overcome even the relatively large bending moments that act on the gripper when handling the tool holder, in which a large and relatively heavy machining tool, for example a drill rod, is clamped. Another advantage is that when a tool holder is gripped with such a gripper, the gripper does not collide with the machine tool spindle, so the gripper can also insert/remove tool holders into/from the machine tool spindle. At least two different types of tool holders are provided with handling grooves that differ in shape from each other, e.g., radial and straight handling grooves, straight handling grooves which are delimited by straight contact surfaces which form different angles with the gripping plane of the gripper in individual types of grippers, with radial handling grooves which are delimited by tapered contact surfaces, which are located at different distances from the gripping plane of the gripper for individual types of clamps, etc.

In an embodiment of the gripper for gripping two types of tool holders of the same or substantially the same size, e.g., CAPTO tool holders with a flange outer diameter of 100 mm and BIG PLUS tool holders with a flange outer diameter of 100 mm, CAPTO tool holders with a flange outer diameter of 80 mm and BIG PLUS tool holders with a flange outer diameter of 80 mm, etc., the first type of which is provided with straight handling grooves and the second type is provided with radial handling grooves, each abutting element is provided with one arc-shaped first supporting element, with a pair of straight second supporting elements being arranged on its sides, wherein each pressing element is provided with one arc-shaped first locking element and one straight second locking element arranged between the pressing element and the abutting element. The gripper with this arrangement of the supporting and pressing elements has the centres of the gripping spaces for the mutually different types of tool holders arranged on the longitudinal axis of the tool holder with relatively small spacing. This makes it easier to program the control system of the handling device to handle different types of tool holders. Another advantage is the fact that the gripping means of the gripper with this arrangement of supporting and pressing elements can have a relatively small width and a relatively small working angle (stroke angle) in the plane of the gripper grip, which is advantageous for removing/inserting the tool holders from/into the magazine.

In a preferred embodiment of the gripper described in the preceding paragraph, straight second supporting elements are partially terminated by flat inner terminating surfaces and partially are terminated by cylindrical inner terminating surfaces, wherein these cylindrical inner terminating surfaces of the straight second supporting elements are adjacent to the cylindrical inner terminating surface of the arc-shaped first supporting element arranged between the cylindrical inner terminating surfaces. This makes it possible to further reduce the dimensions of the gripper in its gripping plane and to reduce the working angle of its gripping means. Such a gripper can be preferably used for removing/inserting tool holders from/into the magazine in which the tool holders are placed relatively closely to each other.

In a preferred embodiment, the pressing finger is provided at its free end, away from the longitudinal axis of the gripper, with a flat or substantially flat outer surface and towards the longitudinal axis of the gripper with a substantially cylindrical inner surface, on which is arranged, at the end of the pressing finger, a pressing element, whose angular size is 6 to 14°, measured from the centre of the smallest gripping space of the respective gripper with the gripping means clamped. Such pressing fingers are relatively narrow in the gripping plane of the gripper, allowing the working stroke of the gripping means to be minimized, or the angle of mutual opening of the gripping means to 10 to 30 °, ideally 10 to 16 °, while being sufficiently rigid. A small mutual opening angle of the pair of gripping means of 10 to 30 °, ideally 10 to 16 ° allows the use of a locking compression spring with a relatively small stroke, and thus a relatively high rigidity, to open them, thereby increasing the gripping strength of the tool holder by the gripper.

Preferably, each supporting element and each locking element of the above-described gripper is provided with a pair of contact surfaces arranged symmetrically with respect to the gripping plane of the gripper, wherein the contact surfaces are inclined at an angle of 20 to 45 ° with respect to the gripping plane of the gripper, towards the longitudinal axis of the gripper. Such supporting and locking elements fit sufficiently deeply into the handling groove/handling grooves of the tool holder and are resistant to the action of the bending moments exerted on them by a large and relatively heavy tool holder with a machine tool locked therein.

### Brief description of drawings

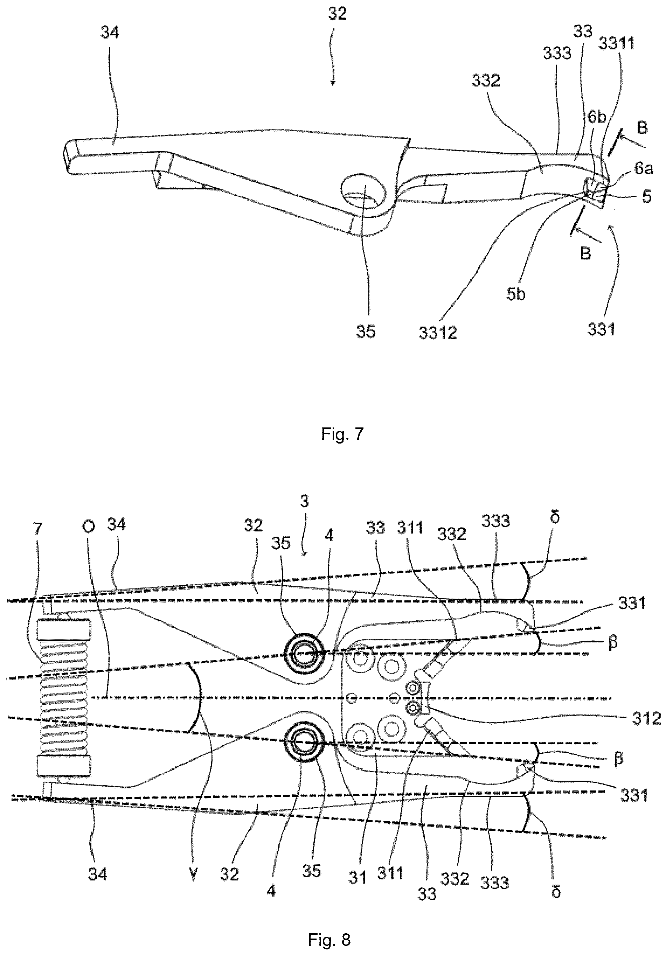

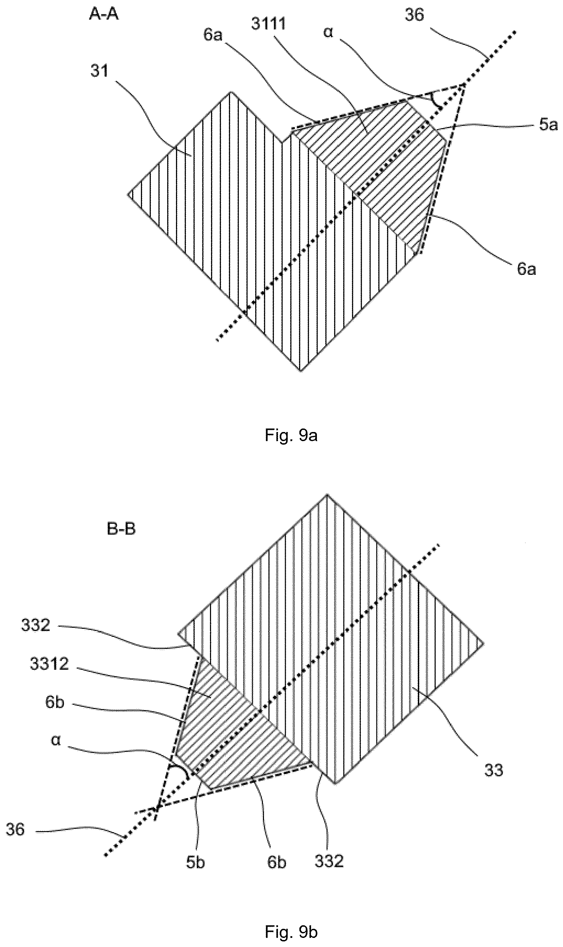

The invention is schematically represented in the drawings, wherein Fig. 1a shows a BIG PLUS type tool holder known from the background art, Fig. 1b shows a CAPTO type tool holder known from the background art, Fig. 2 shows a handling arm with a pair of grippers according to the present invention, Fig. 2a shows a left side view of the gripper with the tool holder of Fig. 2 in the direction of the left arrow of Fig. 2, Fig. 2b shows a right side view of the gripper of Fig. 2 in the direction of the right arrow of Fig. 2, Fig. 3 shows the gripper according to the present invention for gripping three different sizes of tool holders with radial handling grooves, Fig. 4 shows the gripper according to the present invention for gripping three different sizes of tool holders with straight handling grooves, Fig. 5 shows the gripper according to the present invention for gripping radial and straight grooves of two different types of tool holders, Fig. 6 shows the rigid support of the gripper of Fig. 5, Fig. 7 shows the pressing finger of the gripper z Fig. 5, Fig. 8 schematically represents the gripper according to the present invention for gripping radial and straight grooves of two different types of tool holders, Fig. 9a shows a cross-section A-A through the rigid support of Fig. 6, Fig. 9b shows a cross-section B-B through the pressing finger of Fig. 7.

### Examples of embodiment

The invention will be described with reference to an exemplary embodiment of a handling device for exchange of machining tools 15 which is provided with a pair of grippers 3 arranged at mutually opposite ends of a handling arm (Fig. 2).

The gripper 3 for the handling arm (Fig. 2, 2a, 2b) of the handling device for automatic exchange of machine tools 15 according to the invention comprises a frame 2 which is firmly mounted on the frame of the handling arm, or it is integrated into the frame of the handling arm. A rigid support 31 is mounted on the frame_2 of the gripper 3, e.g., it is screwed to it, attached with pins, welded, etc. The rigid support 31 is provided with a pair of abutting elements 311 which are arranged axially symmetrically with respect to the longitudinal axis O of the gripper 3. The pair of abutting elements 311 is thus arranged in the shape of the letter V. The abutting elements 311 of the rigid support 31 are adapted to fit into a handling groove 131, 131a, 131b of the tool holder 1 of the machining tool 15 and to grip the tool holder 1 by the handling groove 131, 131a, 131b. A pair of gripping means 32 is further mounted on the frame 2 of the gripper 3. This pair of gripping means 32 is provided with a pair of pressing fingers 33 arranged against each other and oriented axially symmetrically with respect to the longitudinal axis O of the gripper 3. Each pressing finger 33 is provided at its free end with a pressing element 331, which is arranged at a level in front of one abutting element 311 of the rigid support 31 and is adapted to fit into the handling groove 131, 131a, 131b of the tool holder 1 of the machining tool 15 and to grip the tool holder 1 of the machining tool 15 by the handling groove 131, 131a, 131b. The abutting elements 311 of the rigid support 31 and the pressing elements 331 at the ends of the pressing fingers 33 are arranged at a level of one common gripping plane 36 of the gripper 3. The gripping plane 36 of the gripper 3 is interlaced with the longitudinal axis O of the gripper 3. The longitudinal axis O of the gripper 3 is perpendicular to the axes 14 of all sizes/types of tool holders 1 to be gripped by the gripper 3. Between the abutting elements 311 of the rigid support 31 and the pressing elements 331 of the pressing fingers 33 is arranged gripping space UP, UP1, UP2, UP3 for the tool holder 1 of the machining tool15. The centre S, S1, S2, S3 of the gripping space UP, UP1, UP2, UP3 lies on the longitudinal axis O of the gripper 3, wherein the pressing elements 331 at the ends of the pressing fingers 33 are situated in each position in a direction away from the abutting elements 311 of the rigid support 31 behind the centre S, S1, S2, S3 of the gripping space UP, UP1, UP2, UP3. The centre S, S1, S2, S3 of the gripping space UP, UP1, UP2, UP3 lies in the gripping plane 36 of the gripper 3, at the intersection of the longitudinal axis O of the gripper and the axis 14 of the tool holder 1.

Fig. 3 schematically represents an exemplary embodiment of the gripper 3 according to the invention for gripping three mutually different sizes of tool holders 1, e.g., having flange 13 diameters of 32 mm, 40 mm, 50 mm or with flange diameters of 63 mm, 80 mm a 100 mm, etc., with radial handling grooves 131a. The rigid support 31 is provided with a pair of abutting elements 311 which are arranged axially symmetrically with respect to the longitudinal axis O of the gripper 3 in a substantially V-shape. The pair of abutting elements 311 311 are, for example, connected to each other in the area of the axis O, so that the abutting elements 311 smoothly adjoin each other and thus form a common central arc-shaped part 313 for more precise abutment and setting of the tool holder 1 to be gripped. In another unillustrated embodiment, the pair of abutting elements 311 is separated by a gap in which a key 312 may optionally be arranged, adapted to be assigned to a guide groove 16 to prevent rotation of the gripper 3 gripped by the tool holder 1 with a radial handling groove 131a, similar to the embodiments of the gripper 3 shown in Figs. 2b, 5 and 8. Each of the pair of pressing fingers 33 arranged against each other and oriented axially symmetrically with respect to the longitudinal axis O of the gripper 3 is at its end provided with a pressing element 331 which is situated at a level in front of one abutting element 311 of the rigid support 31. The abutting elements 311 of the rigid support 31 and the pressing elements 331 at the gripping ends 33 of the pressing fingers are adapted to fit into the radial handling grooves 131a of the tool holder 1 of the machining tool 15 and to grip the tool holder 1 by the radial handling grooves 131a. Each of the abutting elements 311 and each of the pressing elements 331 towards the longitudinal axis O of the gripper 3 is terminated, for example, by three side-by-side cylindrical inner terminating surfaces 5a and is provided with a pair of tapered contact surfaces 6a on its sides. In another unillustrated embodiment, at least one of the pressing elements 331 is terminated by a flat inner terminating surface 5b. Between the abutting elements 311 of the rigid support 31 and the pressing elements 331 of the pressing fingers 33 is arranged a trio of gripping spaces UP1, UP2, UP3 for tool holders 1 of three mutually different sizes with radial handling grooves 131a. The centres S1, S2, S3 of the gripping spaces UP1, UP2, UP3 are arranged at a distance from each other on the longitudinal axis O of the gripper 3.

Fig. 4 schematically represents an exemplary embodiment of the gripper 3 according to the invention for gripping three mutually different sizes of tool holders 1, e.g., with flange 13 diameters of 32 mm, 40 mm, 50 mm or with flange 13 diameters of 63 mm, 80 mm and 100 mm, etc., with straight handling grooves 131b. The rigid support 31 is provided with a pair of abutting elements 311 which are arranged axially symmetrically with respect to the longitudinal axis O of the gripper 3 in the shape of the letter V. Each of the pair of pressing fingers 33 arranged against each other and oriented axially symmetrically with respect to the longitudinal axis O of the gripper 3 is at its free end provided with a pressing element 331 which is located at a level in front of one abutting element 311 of the rigid support 31. The abutting elements 311 of the rigid support 31 and the pressing elements 331 of the pressing fingers 33 are adapted to fit into the straight handling grooves 131b of the tool holder 1 of the machining tool 15 and to grip the tool holder 1 by the straight handling grooves 131b. Each of the abutting elements 311 and each of the pressing elements 331 is terminated towards the longitudinal axis O of the gripper 3 by a flat inner terminating surface 5b and is provided with a pair of straight contact surfaces 6b on its sides. A trio of gripping spaces UP1, UP2, UP3 for tool holders 1 of three mutually different sizes with straight handling grooves 131b is arranged between the abutting elements 311 of the rigid support 31 and the pressing elements 331 of the pressing fingers 33. The centres S1, S2, S3 of the gripping spaces UP1, UP2, UP3 are arranged at a distance from each other on the longitudinal axis O of the gripper 3.

In an exemplary embodiment of the gripper 3 (Fig. 5) for gripping at least two different types of tool holders 1 with substantially the same or similar sizes of diameters of the flanges 13, the rigid support 31 is provided with a pair of abutting elements 311 which are arranged axially symmetrically with respect to the longitudinal axis O of the gripper 3 substantially in the shape of the letter V and which, for example, form an angle ε of 90 ° with each other (Fig. 6). Each of the pair of pressing fingers 33 arranged against each other and oriented axially symmetrically with respect to the longitudinal axis O of the gripper 3 is provided at its free end with a pressing element 331 which is situated at a level in front of one abutting element 311 of the rigid support 31. Each abutting element 311 of the rigid support 31 is provided with at least two mutually different supporting elements 3111, 3112 (Fig. 6) each pressing element 331 is provided with at least two mutually different locking elements 3311, 3312 (Fig. 7). The first supporting elements 3111 and the first locking elements 3311 are adapted to fit into the handling groove 131, 131a, 131b of the first type of tool holder 1 of the machining tool 15, e.g., the type with a radial handling groove 131a, and to grip the first type of the tool holder 1 of the machining tool 15 by the handling groove 131, 131a, 131b. The second supporting elements 3112 and the second locking elements 3312 are adapted to fit into the handling groove 131, 131a, 131b of a different type of the tool holder 1 of the machining tool 15, e.g., a type with straight handling grooves 131b, and to grip a different type of the tool holder 1 of the machining tool 15 by the handling groove 131, 131a, 131b. A pair of the gripping spaces UP1, UP2 for tool holders 1 of two different type is arranged between the abutting elements 311 of the rigid support 31 and the pressing elements 331 of the pressing fingers 33. The centres S1, S2 of the gripping spaces UP1, UP2 are arranged at a distance from each other on the longitudinal axis O of the gripper 3.

The angular size of each of the pair of abutting elements 311 is in all the above-described embodiments between 40 and 60 °, measured from the centre S, S1, S2, S3 of the smallest gripping space UP, UP1, UP2, UP3 of the respective gripper 3.

The angular circumferential size ζ of the pressing element 331 exemplarily ranges, for example, from 5 to 15 °, more preferably from 8 to 12 °, most preferably from 9 to 11 °, measured from the centre S, S1, S2, S3 of the smallest gripping space UP, UP1, UP2, UP3, in the closed state of the gripper 3 (Figs. 3, 4 and 5).

In the embodiment of the gripper 3 for gripping two different types of tool holders 1 (Fig. 5), each abutting element 311 of the rigid support 31 (Fig. 6) is provided with one arc-shaped first supporting element 3111 at whose ends a pair of straight second supporting elements 3112 is arranged, wherein at a level in front of each abutting element 311, at the free end of the pressing finger 33 (Fig. 7), a pressing element 331 is located, which is provided with one arc-shaped first locking element 3311 and one straight second straight second locking element 3312 arranged between the arc-shaped first locking element 3311 and the abutting element 311. Each arc-shaped first supporting element 3111 and each arc-shaped first locking element 3311 is terminated by a cylindrical inner terminating surface 5a towards the longitudinal axis O of the gripper 3 and is provided on its sides with a pair of tapered contact surfaces 6a. Each straight second supporting element 3112 and each straight second locking element 3312 is terminated by a flat inner terminating surface 5b towards the longitudinal axis O of the gripper 3 and is provided with a pair of straight contact surfaces 6b on its sides. The arc-shaped first locking elements 3311 have relatively small inner terminating surfaces 5, and therefore can optionally be terminated by a flat terminating surface 5b, instead of a cylindrical terminating surface 5a.

In another unillustrated embodiment of the gripper 3 for gripping three different types of tool holders 1, each abutting element 311 is provided with one first supporting element 3111, next to which, away from the longitudinal axis O of the gripper 3, a second supporting element 3112 is arranged. Next to the second supporting element 3112, in a direction away from the longitudinal axis O of the gripper 3, an unillustrated third supporting element is arranged, wherein at a level in front of the abutting element 311, at the free end of the pressing finger 33, a pressing element 331 is located, the pressing element 331 being provided with one first locking element 3311, a second locking element 3312 which is arranged between the first locking element 3311 and the abutting element 311, and a third locking element (not shown) which is arranged between the second locking element 3312 and the abutting element 311.

In yet another unillustrated exemplary embodiment of the gripper 3 for gripping at least two different types of tool holders 1 and of at least two different sizes of at least of the tool holder 1, the features of the gripper 3 according to at least one of the above-described embodiments of the gripper 3 for gripping at least two mutually different sizes of tool holders 1 are combined with the features of the gripper 3 according to at least one of the above-described embodiments of the gripper 3 for gripping at least two different types of tool holders 1.

The abutting element 311 of the rigid support 31 of the gripper for gripping two different types of tool holders 1 (Fig. 6) is provided, for example, with one arc-shaped first supporting element 3111, on the sides of which a pair of straight second supporting elements 3112 is arranged next to it. The straight second supporting elements 3312 are partially terminated by flat inner terminating surfaces 5b and partially terminated by cylindrical inner terminating surfaces 5a which are connected to the cylindrical terminating surface 5a arranged between them on adjacent arc-shaped supporting element 3111. This reduces the width of the gripper 3 and prevents collision of the straight second supporting elements 3112 for gripping one type of tool holder 1 with the tapered contact surfaces 6a of another type of tool holder 1.

The free end of the pressing finger 33 (Fig. 7) is provided, for example, with an outer flat or substantially flat surface 333, oriented away from the longitudinal axis O of the gripper, and an inner cylindrical or substantially cylindrical surface 332, oriented towards the longitudinal axis O of the gripper 3 for matching the outer circumference of the flange 13 of the gripped tool holder 1 (Figs. 7 and 8). On the cylindrical inner surface 332 of the pressing finger 33 a pressing element 331 is arranged, which is provided with a pair of locking elements 3311, 3312. The angular circumferential size ζ of the pressing element 331 ranges from 5 to 15 °, more preferably from 8 to 12 °, most preferably from 9 to 11 °, measured from the centre S, S1, S2, S3 of the smallest gripping space UP, UP1, UP2, UP3, in the closed state of the gripper 3 (Fig. 5). The angle β of the swing of one pressing finger 33 is between 5 and 15 °, more preferably between 5 and 10 °, most preferably between 5 and 8 ° (Fig. 8). The gripper 3 provided with a pair of such pressing fingers 33 has a relatively small working angle y of mutual expansion of the pressing fingers 33 of 10 to 30 °, preferably 10 to 20 °, most preferably 10 to 16 °, when gripping the tool holder 1, so that it can be provided with a relatively short and rigid locking compression spring 7, thereby increasing the rigidity of the grip of the gripper 3. Each free end of the pressing finger 33 of the gripping means 32 is terminated, for example, in a direction away from the longitudinal axis O of the gripper 3 by a flat or substantially flat outer surface 333, which forms an angle δ of less than 15 °, more preferably less than 10 °, most preferably less than 5 °, with the straight or substantially straight lever arm 34 of the same gripping means 32. Such a relatively small bending of the gripping means 32 contributes to a higher gripping rigidity of the gripper 3.

The pressing finger 33 (Figs. 7 and 8) is provided, for example, with a rotating element 35, which is swingingly mounted in a swing mounting 4, e.g. in a bearing in the frame 2 of the gripper 3, for the swinging rotation of the pressing finger 33 around the swing mounting 4 and thus for the lever transfer of the force exerted by the locking compression spring 7 on the lever arm 34 of the pressing finger 33, from the lever arm 34 on the free end of the pressing finger 33 with the pressing element 331.

In all the above-described embodiments of the gripper 3, the pair of contact surfaces 6, 6a, 6b of each abutting/pressing/locking element 311, 3111, 3112, 331, 3311, 3312 is adapted for contact with the contact surfaces 6, 6a, 6b, which are arranged along the sides of the handling groove 131, 131a, 131b of the flange 13 of the tool holder 1 of the machining tool 15, wherein the pair of contact surfaces 6, 6a, 6b is arranged symmetrically in a V-shape with respect to the gripping plane 36 of the gripper 3 and the distance between the contact surfaces 6, 6a, 6b of one pair decreases towards the respective inner terminating surface 5, 5a, 5b. The angle α of the inclination of the contact surface 6, 6a, 6b of the abutting/pressing/locking element 311, 3111, 3112, 331, 3311, 3312 with respect to the gripping plane 36, in a section of the abutting element 311 perpendicularly to the gripping plane 36 and to the inner terminating surface 5, 5a, 5b, is between 20 ° and 45 °, preferably 30 ° (Figs. 9a and 9b).

In all the above-described embodiments, the handling arm for the handling device for exchange of tool holders 1 works in such a way that when the tool holder 1 is gripped by the gripper 3, the handling arm approaches the tool holder 1, e.g., the tool holder 1 stored in a magazine or clamped in a machine tool, wherein the abutting elements 311 and the pressing elements 331 engage with the handling groove 131, 131a, 131b/handling grooves 131, 131a, 131b of the tool holder 1. Then the pressing fingers 33 of the gripping means 32 of the gripper 3 are brought closer to each other, e.g., by the locking compression spring 7 acting on the lever arms 34 of the pressing fingers 33, whereby the pressing elements 331 at the free ends of the pressing fingers 33 are inserted into the handling groove 131, 131a, 131b/handling grooves 131, 131a, 131b of the tool holder 1. In this manner, the tool holder 1, is firmly pressed against the abutting elements 311 by the pressure of the pressing fingers 33. At the same time, the contact surfaces 6, 6a, 6b of the pressing elements 331 and/or the locking elements 3311, 3312 exert pressure on the contact surfaces 6, 6a, 6b arranged on the sides of the handling groove 131, 131a, 131b/handling grooves 131, 131a, 131b of the flange 13 of the tool holder 1 and at the same time the contact surfaces 6, 6a, 6b arranged along the sides of the handling groove 131, 131a, 131b/handling grooves 131, 131a, 131b of the flange 13 exert pressure on the contact surfaces 6, 6a, 6b of the abutting elements 311 and/or supporting element 3111, 3112, thereby locking the tool holder 1 firmly in the grippers 3. When releasing tool holder 1 from the gripper 3, e.g., after the tool holder 1 has been placed in the magazine or clamped in the spindle of the machine tool, the pressing fingers 33 of the gripping means 32 of the gripper 3 are moved apart e.g., by the action of unillustrated hydraulic cylinders which apply pressure to the lever arms 34 of the gripping means 32, against the direction of action of the locking compression spring 7, etc., whereby the contact surfaces 6, 6a, 6b of the pressing elements 331 and/or the locking elements 3311, 3312 cease to press against the contact surfaces 6, 6a, 6b arranged on the sides of the handling groove 131, 131a, 131b/handling grooves 131, 131a, 131b of the flange 13, and consequently, the contact surfaces 6, 6a, 6b arranged along the sides of the handling groove 131, 131a, 131b/handling grooves 131, 131a, 131b of the flange 13 stops pressing against the contact surfaces 6, 6a, 6b of the abutting elements 311 and/or the supporting elements 3111, 3112, thereby unlocking the tool holder 1 and releasing it from the gripper 3 of the handling arm.

### List of references

- 1: tool holder
- 11: shank
- 12: tool clamping portion
- 13: flange
- 131: handling groove
- 131a: radial handling groove
- 131b: straight handling groove
- 14: axis of the tool holder
- 15: machining tool
- 16: guide groove
- 2: frame
- 3: gripper
- 31: rigid support
- 311: abutting element
- 3111: first supporting element
- 3112: second supporting element
- 312: key
- 313: common central arc-shaped part of the abutting elements
- 32: gripping means
- 33: pressing finger
- 331: pressing element
- 3311: first locking element
- 3312: second locking element
- 332: inner surface of the pressing finger
- 333: outer surface of the pressing finger
- 34: lever arm
- 35: rotating element
- 36: gripping plane
- 4: swing mounting
- 5: inner terminating surface
- 5a: cylindrical inner terminating surface
- 5b: flat inner terminating surface
- 6: contact surface
- 6a: tapered contact surface
- 6b: flat contact surface
- 7: locking compression spring
- O: longitudinal axis of the gripper
- UP: gripping space
- UP1: first gripping space
- UP2: second gripping space
- UP3: third gripping space
- S: centre of the gripping space
- S1: centre of the first gripping space
- S2: centre of the second gripping space
- S3: centre of the third gripping space
- α: inclination angle of the contact surfaces with respect to the gripping plane
- β: swing angle of the pressing finger
- γ: working angle of opening of the pressing fingers of the gripper
- δ: angle between the gripping arm and the lever arm of the pressing finger
- ε: inclination angle of the pair of abutting elements of the rigid support
- ζ: angular size of the pressing element

## Claims

1. A gripper (3) for the handling arm of a handling device for automatic exchange of machining tools (15), wherein the gripper (3) comprises a frame (2), on which a rigid support (31) is mounted, wherein on the frame (2) of the gripper (3) is further mounted a pair of gripping means (32) comprising pressing elements (331), the rigid support (31) is provided with a pair of abutting elements (311) which are arranged in a V-shape, axially symmetrically with respect to the longitudinal axis (O) of the gripper (3), wherein the abutting elements (311) are adapted to fit into a handling groove (131, 131a, 131b) of a tool holder (1) of the machining tool (15) and to grip the tool holder (1) of the machining tool (15) by the handling groove (131, 131a, 131b), wherein the pair of gripping means (32) is provided with a pair of pressing fingers (33) arranged against each other and oriented axially symmetrically with respect to the longitudinal axis (O) of the gripper (3), each pressing finger (33) being swingingly mounted in the frame (2) of the gripper (3) and provided at its free end with a pressing element (331), which is situated at a level in front of one abutting element (311) of the rigid support (31), wherein the pressing element (331) is adapted to fit into the handling groove (131, 131a, 131b) of the tool holder (1) of the machining tool (15) and to grip the tool holder (1) of the machining tool (15) by the handling groove (131, 131a, 131b), wherein at least two gripping spaces (UP, UP1, UP2, UP3) for tool holders (1) of at least two different sizes and/or types are arranged between the abutting elements (311) of the rigid support (31) and the pressing elements (331) at the free ends of the pressing fingers (33), wherein the centres (S, S1, S2, S3) of the gripping spaces (UP, UP1, UP2, UP3) are arranged at a distance from each other on the longitudinal axis (O) of the gripper (3), wherein the pressing elements (331) at the free ends of the pressing fingers (33) are in each position situated in a direction away from the abutting elements (311) of the rigid support (31) behind the centre (S, S1, S2, S3) of the gripping space (UP, UP1, UP2, UP3) for the tool holder (1) of the machining tool (15) and each abutting element (311) of the rigid support (31) is provided with at least two mutually different supporting elements (3111, 3112) and each pressing element (331) is provided with at least two mutually different locking elements (3311, 3312) at the free ends of the pressing fingers (33), wherein the first supporting elements (3111) and the first locking elements (3311) are adapted to fit into the handling groove (131, 131a, 131b) of the first type of the tool holder (1) of the machining tool (15) and to grip the first type of the tool holder (1) of the machining tool by the handling groove (131, 131a, 131b) and other supporting elements (3112) and other locking elements (3312) are adapted to fit into the handling groove (131, 131a, 131b) of a different type of tool holder (1) of the machining tool and to grip a different type of tool holder (1) of the machining tool by the handling groove (131, 131a, 131b).

2. The gripper (3) according to claim 1, wherein each abutting element (311) is provided with one arc-shaped first supporting element (3111) and a pair of straight second supporting elements (3112) arranged on its sides, wherein each pressing element (331) is provided with one arc-shaped first locking element (3311) and with one straight second locking element (3312) arranged between the arc-shaped first locking element (3311) and the abutting element (311).

3. The gripper (3) according to claim 2, wherein the straight second supporting elements (3112) are partially terminated by straight inner terminating surfaces (5b) and partially by cylindrical inner terminating surfaces (5a), wherein the cylindrical inner terminating surfaces (5a) of the straight second supporting elements (3112) are adjacent to the cylindrical inner terminating surface (5a) of the arc-shaped first supporting element (3111) arranged between the cylindrical inner terminating surfaces (5a).

4. The gripper (3) according to any of claims 1 to 3, wherein each pressing finger (33) is provided at its free end, in a direction away from the longitudinal axis (O) of the gripper (3), with a substantially flat outer surface (333) and towards the longitudinal axis (O) of the gripper (3) with a substantially cylindrical inner surface (332), on which is arranged the pressing element (331) whose angular circumferential size (ζ) is between 6 and 14 °.

5. The gripper (3) according to any of claims 2 to 4, wherein each supporting element (3111, 3112) and each locking element (3311, 3312) is provided with a pair of contact surfaces (6, 6a, 6b) arranged symmetrically with respect to the gripping plane (36) of the gripper (3), wherein the contact surfaces (6, 6a, 6b) are inclined at an angle (α) of 20 to 45 ° with respect to the gripping plane (36) of the gripper (3), towards the longitudinal axis (O) of the gripper (3).

## Patentansprüche

1. Greifer (3) für einen Manipulationsarm einer Manipulationseinrichtung zum automatischen Wechsel von Bearbeitungswerkzeugen (15), wo der Greifer (3) einen Rahmen (2) aufweist, auf dem eine starre Stütze (31) gelagert ist, wobei auf dem Rahmen (2) des Greifers (3) weiterhin ein Paar der Greifmittel (32) gelagert ist, die die Druckelemente (331) aufweisen, die starre Stütze (31) ein Paar der Auflageelemente (311) aufweist, die zur Längsachse (O) des Greifers (3) in V-Form achssymmetrisch angeordnet sind, wo die Auflageelemente (311) zum Einrasten in eine Manipulationsnut (131, 131a, 131b) einer Werkzeugaufnahme (1) des Bearbeitungswerkzeuges (15) und zur Aufnahme der Werkzeugaufnahme (1) des Bearbeitungswerkzeuges (15) an der Manipulationsnut (131, 131a, 131b) angepasst sind, wobei das Paar der Greifmittel (32) ein Paar der achssymmetrisch zur Längsachse (O) des Greifers (3) gegeneinander ausgerichteten Druckfinger (33) aufweist, wobei jeder Druckfinger (33) im Rahmen (2) des Greifers (3) schwenkbar gelagert ist und an seinem freien Ende ein Druckelement (331) aufweist, das im Niveau vor einem Auflageelement (311) der starren Stütze (31) situiert ist, wobei das Druckelement (331) zum Einrasten in die Manipulationsnut (131, 131a, 131b) der Werkzeugaufnahme (1) des Bearbeitungswerkzeuges (15) und zur Aufnahme der Werkzeugaufnahme (1) des Bearbeitungswerkzeuges (15) an der Manipulationsnut (131, 131a, 131b) angepasst ist, **wo** zwischen den Auflageelementen (311) der starren Stütze (31) und den Druckelementen (331) an freien Enden der Druckfinger (33) mindestens zwei Greifräume (UP, UP1, UP2, UP3) für die Werkzeugaufnahmen (1) von mindestens zwei unterschiedlichen Größen und/oder Typen angeordnet sind, wobei die Mitten (S, S1, S2, S3) der Greifräume (UP, UP1, UP2, UP3) auf der Längsachse (O) des Greifers (3) gegenseitig beabstandet angeordnet sind, wobei die Druckelemente (331) an freien Enden der Druckfinger (33) in jeder von ihrer Lage in der Richtung von den Auflageelementen (311) der starren Stütze (31) hin hinter der Mitte (S, S1, S2, S3) des Greifraumes (UP, UP1, UP2, UP3) für die Werkzeugaufnahme (1) des Bearbeitungswerkzeuges (15) situiert sind und jedes Auflageelement (311) der starren Stütze (31) mindestens zwei gegenseitig unterschiedliche Stützelemente (3111, 3112) aufweist und jedes Druckelement (331) an freien Enden der Druckfinger (33) mindestens zwei gegenseitig unterschiedliche Verschlusselemente (3311, 3312) aufweist, wobei die ersten Stützelemente (3111) und die ersten Verschlusselemente (3311) zum Einrasten in die Manipulationsnut (131, 131a, 131b) des ersten Typs der Werkzeugaufnahme (1) des Bearbeitungswerkzeuges (15) und zur Aufnahme des ersten Typs der Werkzeugaufnahme (1) des Bearbeitungswerkzeuges an der Manipulationsnut (131, 131a, 131b) angepasst sind und weitere Stützelemente (3112) und weitere Verschlusselemente (3312) zum Einrasten in die Manipulationsnut (131, 131a, 131b) eines unterschiedlichen Typs der Werkzeugaufnahme (1) des Bearbeitungswerkzeuges und zur Aufnahme eines unterschiedlichen Typs der Werkzeugaufnahme (1) des Bearbeitungswerkzeuges an der Manipulationsnut (131, 131a, 131b) angepasst sind.

2. Greifer (3) nach dem Anspruch 1, wo jedes Auflageelement (311) ein bogenförmiges erstes Stützelement (3111) und an seinen Seiten angeordnetes Paar der direkten zweiten Stützelemente (3112) aufweist, wobei jedes Druckelement (331) ein bogenförmiges erstes Verschlusselement (3311) und ein zwischen ihm und dem Auflageelement (311) angeordnetes direktes zweites Verschlusselement (3312) aufweist.

3. Greifer (3) nach dem Anspruch 2, wo die direkten zweiten Stützelemente (3112) mit geraden inneren Abschlussflächen (5b) und teilweise zylindrischen inneren Abschlussflächen (5a) teilweise abgeschlossen sind, wobei die zylindrischen inneren Abschlussflächen (5a) der direkten zweiten Stützelemente (3112) an der zwischen ihnen angeordneten zylindrischen inneren Abschlussfläche (5a) des bogenförmigen ersten Stützelementes (3111) anliegen.

4. Greifer (3) nach einem der Ansprüche 1 bis 3, wo jeder Druckfinger (33) an seinem freien Ende, in der Richtung von der Längsachse (O) des Greifers (3) hin, eine im Grunde genommen gerade Außenfläche (333) und in der Richtung zur Längsachse (O) des Greifers (3) hin im Grunde genommen zylindrische Innenfläche (332) aufweist, auf der das Druckelement (331) angeordnet ist, dessen Winkelumfangsgröße (ζ) 6 bis 14° beträgt.

5. Greifer (3) nach einem der Ansprüche 2 bis 4, wo jedes Stützelement (3111, 3112) und jedes Verschlusselement (3311, 3312) ein Paar der Kontaktflächen (6, 6a, 6b) aufweist, die zur Greifebene (36) des Greifers (3) symmetrisch angeordnet sind, wobei die Kontaktflächen (6, 6a, 6b) zur Greifebene (36) des Greifers (3), in der Richtung zur Längsachse (O) des Greifers (3) hin, unter einem Winkel (α) der Neigung 20 bis 45° geneigt sind.

## Revendications

1. Pince (3) pour bras de manutention d'un appareil de changement automatique de la machine-outil (15), où la pince (3) comprend un cadre (2) sur lequel un support rigide (31) est disposé, tandis que sur le cadre (2) de la pince (3) est, en outre, disposée une paire de moyens de prise (32) comprenant des éléments de pression (331), le support rigide (31) étant pourvu d'une paire d'éléments d'appui (311), disposés de manière axisymétrique par rapport à l'axe longitudinal (O) de la pince (3) en forme de V, où les éléments d'appui (311) sont adaptés pour s'insérer dans la rainure de manipulation (131, 131a, 131b) de porte-outil (1) de la machine-outil (15) et pour maintenir le porte-outil (1) de la machine-outil (15) par la rainure de manipulation (131, 131a, 131b), tandis que la paire de moyens de prise (32) est pourvue d'une paire de doigts d'appui (33) opposés, orientés de manière axisymétrique par rapport à l'axe longitudinal (O) de la pince (3), tandis que chaque doigt d'appui (33) est disposé de manière pivotante dans le cadre (2) de la pince (3) et pourvu à son extrémité libre d'un élément de pression (331), disposé devant l'un des élément d'appui (311) du support rigide (31), tandis que l'élément de pression (331) est adapté pour s'engager dans la rainure de manipulation (131, 131a, 131b) du porte-outil (1) de la machine-outil (15) et pour maintenir le porte-outil (1) de la machine-outil (15) par la rainure de manipulation (131, 131a, 131b), **où** sont disposées au moins deux zones de saisie (UP, UP1, UP2, UP3) pour les porte-outils (1) d'au moins deux tailles et/ou types différents, tandis que les centres (S, S1, S2, S3) des zones de saisie (UP, UP1, UP2, UP3) sont disposés à une distance l'un par rapport à l'autre sur l'axe longitudinal (O) de la pince (3), tandis que les éléments de pression (331) sur les extrémités libres des doigts d'appui (33) sont situés dans chacune de leurs positions dans le sens opposé aux éléments d'appui (311) du support rigide (31) derrière le centre (S, S1, S2, S3) de la zone de saisie (UP, UP1, UP2, UP3 ) du porte-outil (1) de la machine-outil (15) et chaque élément d'appui (311) du support rigide (31) est pourvu d'au moins deux éléments de support (3111, 3112) différents l'un de l'autre et chaque élément de pression (331) sur les extrémités libres des doigts d'appui (33) est pourvu d'au moins deux éléments de verrouillage (3311, 3312) différents l'un de l'autre, tandis que les premiers éléments de support (3111) et les premiers éléments de verrouillage (3311) sont adaptés pour s'insérer dans la rainure de manipulation (131, 131a, 131b) du premier type du porte-outil (1) de la machine-outil (15) et pour engager le premier type du porte-outil (1) de la machine-outil (15) par la rainure de manipulation (131, 131a, 131b) ; et d'autres éléments de support (3112) et d'autres éléments de verrouillage (3312) sont adaptés pour s'insérer dans la rainure de manipulation (131, 131a, 131b) d'un autre type de porte-outil (1) de la machine-outil et pour insérer un autre type de porte-outil (1) de la machine-outil par la rainure de manipulation (131, 131a, 131b).

2. La pince (3) selon la revendication 1, **caractérisée en ce que** chaque élément d'appui (311) est pourvu d'un premier élément de support arqué (3111) et d'une paire de seconds éléments de support droits (3112) disposés le long de ses côtés, tandis que chaque élément de pression (331) est pourvu d'un premier élément de verrouillage arqué (3311) et d'un second élément de verrouillage droit (3312) disposés entre le premier élément arqué et l'élément d'appui (311).

3. La pince (3) selon la revendication 2, **caractérisée en ce que** les seconds éléments de support droits (3112) sont partiellement terminés par des surfaces de terminaison intérieures droites (5b) et tandis que les surfaces de terminaison intérieures cylindriques (5a) des seconds éléments de support droits (3112) sont adjacentes à la surface de terminaison intérieure cylindrique (5a) du premier élément de support arqué (3111) disposé entre les deux.

4. La pince (3) selon l'une des revendications 1 à 3, **caractérisée en ce que** chaque doigt d'appui (33) est pourvu à son extrémité libre, dans le sens opposé à celui de l'axe longitudinal (O) de la pince (3), d'une surface extérieure sensiblement plate (333) et vers l'axe longitudinal (O) de la pince (3) d'une surface intérieure sensiblement cylindrique (332) sur laquelle est disposé un élément de pression (331) dont la circonférence angulaire (ζ) est comprise entre 6 et 14°.

5. La pince (3) selon l'une des revendications 2 à 4, **caractérisée en ce que** chaque élément de support (3111, 3112) et chaque élément de verrouillage (3311, 3312) est pourvu d'une paire de surfaces de contact (6, 6a, 6b) disposées symétriquement par rapport au plan de saisie (36) de la pince (3), tandis que les surfaces de contact (6, 6a, 6b) sont inclinées vers le plan de saisie (36) de la pince (3), vers l'axe longitudinal (O) de la pince (3), à un angle (α) d'inclinaison de 20 à 45°.
